# EUROPEAN PATENT APPLICATION

(11) **EP 2 060 429 A1**
(43) Date of publication of application: **20.05.2009**
(21) Application number: 07806384.9
(22) Date of filing: 30.08.2007
(51) Int. Cl.: B60K 6/36, B60K 6/365, B60K 6/387, B60K 6/445, B60K 6/547, B60K 17/04

(54) **POWER OUTPUT DEVICE AND HYBRID VEHICLE**

(30) Priority: 06.09.2006 JP 2006241931
(71) Applicant: Toyota Jidosha Kabushiki Kaisha, Toyota-shi, Aichi 471-8571 (JP)
(72) Inventor: OBA, Hidehiro, Toyota-shi Aichi 471-8571 (JP); KATSUTA, Hiroshi, Toyota-shi Aichi 471-8571 (JP); KOMADA, Hideaki, Toyota-shi Aichi 471-8571 (JP)
(74) Representative: TBK-Patent
(86) International application number: PCT/JP2007/066907
(87) International publication number: WO 2008/029707

(57) **Abstract**

The hybrid vehicle 20 includes an engine 22; a motor MG1 and a motor MG2 capable of inputting and outputting power respectively; a power distribution and integration mechanism 40 including a sun gear 41 connected to the motor MG1, a carrier 45 connected to the motor MG2, and a ring gear 42 connected to the engine 22; and a transmission 60 capable of selectively transmitting power outputted through the sun gear 41 and a first motor shaft 46 and power outputted through the carrier 45 and a carrier shaft 45a to a drive shaft 67 with a change in speed ratio as well as having a clutch C2 and a fixing member 64 for non-rotatably fixing the sun gear 41 of the power distribution and integration mechanism 40.

## Description

### Technical Field

The present invention relates to a power output apparatus for outputting power to a drive shaft and a hybrid vehicle having the same.

### Background Art

Conventionally, as such a power output apparatus, there has been known a power output apparatus including an internal combustion engine, two motors, a so-called ravigneaux planetary gear mechanism, a parallel shaft-type transmission capable of selectively coupling two output elements of the planetary gear mechanism to an output shaft (for example, see Patent Document 1). The power output apparatus is adapted for a front-wheel-drive vehicle, and the power output apparatus is configured such that the internal combustion engine is arranged transversely; the rotating shafts of the internal combustion engine and the planetary gear mechanism, the two motors and the parallel shaft-type transmission extend in parallel to each other. In addition, conventionally, there has been known a power output apparatus including a planetary gear device having an input element connected to an internal combustion engine and two output elements; and a parallel shaft-type transmission having a countershaft connected respectively to a corresponding output element of the planetary gear mechanism (for example, see Patent Document 2).
According to the power output apparatus, each of the two output elements of the planetary gear device is fixed respectively to an inner periphery of a corresponding rotor in an electric drive section. Further, conventionally, there has been known a power output apparatus including a power distribution mechanism having an input element connected to an internal combustion engine, a reaction element connected to a first motor generator, and an output element connected to a second motor generator; and two clutches for selectively connecting an axle shaft serving as the output member to between the output element and the reaction element of the power distribution mechanism (for example, see Patent Document 3). According to the power output apparatus, when a first motor generator starts to perform power operation at a negative rotation, the two clutches are controlled so as to connect the reaction element of the power distribution mechanism to the output member and release the connection between the output element and the output member. This can suppress the occurrence of power circulation which causes the first motor generator to be driven by an electric power generated by the second motor generator using part of power of the output member.
[Patent Document 1] Japanese Patent Laid-Open No. 2005-155891
[Patent Document 2] Japanese Patent Laid-Open No. 2003-106389
[Patent Document 3] Japanese Patent Laid-Open No. 2005-125876

### Disclosure of the Invention

The above described power output apparatuses can operate the internal combustion engine at an effective operation point by outputting a requested power to a drive shaft by causing the two motors to perform torque conversion on power from the internal combustion engine. However, there is still room for improvement in the conventional power output apparatus in that power transmission efficiency should be improved in a wider driving area.

In view of this, an object of the present invention is to provide a power output apparatus and a hybrid vehicle having the same capable of improving power transmission efficiency in a wider driving area.

In order to achieve the above object, the power output apparatus and the hybrid vehicle in accordance with the present invention adopt the following means.

The present invention is directed to a power output apparatus for outputting power to a drive shaft. The power output apparatus includes: an internal combustion engine; a first motor capable of inputting and outputting power; a second motor capable of inputting and outputting power; a power distribution and integration mechanism having a first element connected to a rotating shaft of the first motor, a second element connected to a rotating shaft of the second motor, and a third element connected to an engine shaft of the internal combustion engine, the power distribution and integration mechanism being configured such that these three elements can be differentially rotated with each other; a transmission mechanism capable of selectively coupling the first element and the second element of the power distribution and integration mechanism to the drive shaft, and capable of selectively transmitting power outputted from the power distribution and integration mechanism through the first element and power outputted from the power distribution and integration mechanism through the second element to the drive shaft at predetermined speed ratios respectively; and a rotation fixing device capable of non-rotatably fixing one of the first element and the second element of the power distribution and integration mechanism.

According to the power output apparatus, when the rotation fixing device is used to non-rotatably fix one of the first and second elements of the power distribution and integration mechanism, power of the internal combustion engine is outputted mechanically (directly) from the other one of the first and second elements which becomes an output element to the transmission mechanism without conversion to electrical energy. Thereby, the power from the internal combustion engine can be transmitted mechanically to the drive shaft through the power distribution and integration mechanism and the transmission mechanism. Moreover, according to such a power output apparatus, when the rotation speed of the first or second element is near a value of 0, power transmission efficiency becomes relatively high. Therefore, if the first or second element is non-rotatably fixed by the rotation fixing device when the rotation speed of the first or second element is near a value of 0, the power transmission efficiency can be maintained in a relatively high state even if the first or second element is released from being rotatably fixed by the rotation fixing device. As a result, the power output apparatus can well improve power transmission efficiency in a wider driving area.

Moreover, according to the power output apparatus in accordance with the present invention, the transmission mechanism may include a first transmission mechanism capable of transmitting power from one of the first and second elements of the power distribution and integration mechanism to the drive shaft at a predetermined speed ratio and a second transmission mechanism capable of transmitting power from the other one of the first and second elements to the drive shaft at a predetermined speed ratio; and the rotation fixing device may non-rotatably fix the first element or the second element which is not connected to one of the first and second transmission mechanisms capable of setting a minimum speed ratio. Thereby, when one of the first and second transmission mechanisms of the transmission mechanism capable of setting a minimum speed ratio is transmitting power from the first or second element of the power distribution and integration mechanism to the drive shaft at the minimum speed ratio, if the rotation fixing device is used to non-rotatably fix the second or first element of the power distribution and integration mechanism, the power from the internal combustion engine can be mechanically transmitted to the drive shaft when the rotation speed of the drive shaft is relatively high. As a result, the power output apparatus can improve fuel efficiency by effectively transmitting power from the internal combustion engine to the drive shaft when the rotation speed of the drive shaft is relatively high.

Further, the transmission mechanism may be a parallel shaft-type transmission including a first transmission mechanism having at least one parallel shaft-type gear trains capable of coupling one of the first and second elements of the power distribution and integration mechanism to the drive shaft; and a second transmission mechanism having at least one parallel shaft-type gear trains capable of coupling the other one of the first and second elements of the power distribution and integration mechanism to the drive shaft. According to the transmission mechanism which is such a parallel shaft-type transmission, when the first transmission mechanism is used to couple one of the first and second elements to the drive shaft and the second transmission mechanism is used to couple the other one of the first and second elements to the drive shaft, power from the internal combustion engine can be mechanically (directly) transmitted to the drive shaft at a fixed speed ratio different from that when the first or second element of the power distribution and integration mechanism is non-rotatably fixed by the above rotation fixing device. Thereby, such a configuration can well improve power transmission efficiency in a further wider driving area.

Moreover, the transmission mechanism may be a planetary gear transmission including a first transmission mechanism including a first transmission planetary gear mechanism and a first fixing device; and a second transmission mechanism including a second transmission planetary gear mechanism and a second fixing device, said first transmission planetary gear mechanism having an input element connected to said first element of said power distribution and integration mechanism, an output element connected to said drive shaft, and a fixable element, said first transmission planetary gear mechanism being configured such that these three elements can be differentially rotated with each other, said first fixing device capable of non-rotatably fixing said fixable element of said first transmission planetary gear mechanism, said second transmission planetary gear mechanism having an input element connected to said second element of said power distribution and integration mechanism, an output element connected to said drive shaft, and a fixable element, said second transmission planetary gear mechanism being configured such that these three elements can be differentially rotated with each other, said second fixing device capable of non-rotatably fixing said fixable element of second transmission planetary gear mechanism. According to the transmission mechanism which is such a planetary gear transmission, non-rotatably fixing both the fixable element of the first transmission planetary gear mechanism and the fixable element of the second transmission planetary gear mechanism by the first fixing mechanism and the second fixing mechanism allows power from the internal combustion engine to be mechanically (directly) transmitted to the drive shaft at a fixed speed ratio different from that when the first or the second element of the power distribution and integration mechanism is non-rotatably fixed by the above rotation fixing device. As a result, such a configuration can well improve power transmission efficiency in a further wider driving area.

In this case, the transmission mechanism may further include a transmission connection/disconnection device capable of performing a connection and a disconnection between the output element and the fixable element of one of the first transmission planetary gear mechanism and the second transmission planetary gear mechanism. According to such a transmission mechanism, connecting the output element of the first or second transmission planetary gear mechanism and the fixable element corresponding to the transmission connection/disconnection device by the transmission connection/disconnection device and non-rotatably fixing the fixable element of the second or first transmission planetary gear mechanism not corresponding to the transmission connection/disconnection device allows the power from the internal combustion engine to be mechanically (directly) transmitted to the drive shaft at a fixed speed ratio different from that when the first or second element of the power distribution and integration mechanism is non-rotatably fixed by the above rotation fixing device and when both the fixable elements of the first and second transmission planetary gear mechanisms are non-rotatably fixed. This can well improve power transmission efficiency in a further wider driving area. Moreover, according to the transmission mechanism, in a state in which the output element and the fixable element of the first or second transmission planetary gear mechanism corresponding to the transmission connection/disconnection device are connected, and the fixable element of the second or first transmission planetary gear mechanism not corresponding to the transmission connection/disconnection device is non-rotatably fixed, when the fixable element of the second or first transmission planetary gear mechanism is made rotatable, each element of the first or second transmission planetary gear mechanism corresponding thereto is substantially locked by the transmission connection/disconnection device to rotate integrally. Therefore, the power from the first element or the second element of the power distribution and integration mechanism can be directly transmitted to the drive shaft, and this state can be assumed to be a state in which the above minimum speed ratio is set.

Moreover, the power output apparatus according to the present invention may further include a connection/disconnection device capable of performing one of a connection and a disconnection between the first motor and the first element; a connection and a disconnection between the second motor and the second element; and a connection and a disconnection between the internal combustion engine and the third element. According to the power output apparatus having such a connection/disconnection device, causing the connection/disconnection device to release the above connection allows a function of the power distribution and integration mechanism to substantially disconnect the internal combustion engine from the first and second motors and the transmission mechanism. This allows the power output apparatus to cause the connection/disconnection device to release the above connection and stop the internal combustion engine. Thereby, the power from at least one of the first and second motors can be effectively transmitted to the drive shaft with a change in speed ratio of the transmission mechanism. Therefore, the power output apparatus can reduce the maximum torque and the like required for the first and second motors, and thus, can further miniaturize the first and second motors. It should be noted that the connection/disconnection device may be provided between the first motor and the first element or between the second motor and the second element to perform a connection and a disconnection between the corresponding first or second motor and the first or second element; and the transmission mechanism may transmit the power to the drive shaft from the first or second motor corresponding to the connection/disconnection device when the above connection by the connection/disconnection device is released.

The present invention is directed to a hybrid vehicle including a drive wheel driven by power from a drive shaft. The hybrid vehicle includes: an internal combustion engine; a first motor capable of inputting and outputting power; a second motor capable of inputting and outputting power; a power distribution and integration mechanism having a first element connected to a rotating shaft of the first motor, a second element connected to a rotating shaft of the second motor, and a third element connected to an engine shaft of the internal combustion engine, the power distribution and integration mechanism being configured such that these three elements can be differentially rotated with each other; a transmission mechanism capable of selectively coupling the first element and the second element of the power distribution and integration mechanism to the drive shaft, and capable of selectively transmitting power outputted from the power distribution and integration mechanism through the first element and power outputted from the power distribution and integration mechanism through the second element to the drive shaft at predetermined speed ratios respectively; and a rotation fixing device capable of non-rotatably fixing one of the first element and the second element of the power distribution and integration mechanism.

The internal combustion engine, the first and second motors, the power distribution and integration mechanism, the transmission mechanism, and the rotation fixing device of the hybrid vehicle constitute the power output apparatus capable of improving power transmission efficiency in a wider driving area. Therefore, the hybrid vehicle can well improve fuel efficiency and drive performance.

Moreover, the transmission mechanism may include a first transmission mechanism capable of transmitting power from one of the first and second elements of the power distribution and integration mechanism to the drive shaft at a predetermined speed ratio; and a second transmission mechanism capable of transmitting power from the other one of the first and second elements to the drive shaft at a predetermined speed ratio; and the rotation fixing device may non-rotatably fix the first element or the second element which is not connected to one of the first and second transmission mechanisms capable of setting a minimum speed ratio.

Further, the transmission mechanism may be a parallel shaft-type transmission including a first transmission mechanism having at least one parallel shaft-type gear train capable of coupling one of the first and second elements of the power distribution and integration mechanism to the drive shaft; and a second transmission mechanism having at least one parallel shaft-type gear train capable of coupling the other of the first and second elements of the power distribution and integration mechanism to the drive shaft.

Moreover, the transmission mechanism may be a planetary gear transmission including a first transmission mechanism including a first transmission planetary gear mechanism and a first fixing device; and a second transmission mechanism including a second transmission planetary gear mechanism and a second fixing device, the first transmission planetary gear mechanism having an input element connected to the first element of the power distribution and integration mechanism, an output element connected to the drive shaft, and a fixable element, the first transmission planetary gear mechanism being configured such that these three elements can be differentially rotated with each other, the first fixing device capable of non-rotatably fixing the fixable element of the first transmission planetary gear mechanism, the second transmission planetary gear mechanism having an input element connected to the second element of the power distribution and integration mechanism, an output element connected to the drive shaft, and a fixable element, the second transmission planetary gear mechanism being configured such that these three elements can be differentially rotated with each other, the second fixing device capable of non-rotatably fixing the fixable element of second transmission planetary gear mechanism.

In this case, the transmission mechanism may further include a transmission connection/disconnection device capable of performing a connection and a disconnection between the output element and the fixable element of one of the first transmission planetary gear mechanism and the second transmission planetary gear mechanism.

Then, the hybrid vehicle of the present invention may further include a connection/disconnection device capable of performing one of a connection and a disconnection between the first motor and the first element; a connection and a disconnection between the second motor and the second element; and a connection and a disconnetion between the internal combustion engine and the third element.

### Brief Description of the Drawings

Figure 1 is a schematic configuration view of a hybrid vehicle 20 in accordance with an embodiment of the present invention;
Figure 2 is an explanatory drawing illustrating a relationship of a rotation speed and a torque of major elements of a power distribution and integration mechanism 40 and a transmission 60 when the speed ratio of the transmission 60 is changed in a shift up direction according to the speed change of the vehicle when the hybrid vehicle 20 of the present embodiment runs with an operation of an engine 22;
Figure 3 is an explanatory drawing similar to Figure 2;
Figure 4 is an explanatory drawing similar to Figure 2;
Figure 5 is an explanatory drawing similar to Figure 2;
Figure 6 is an explanatory drawing similar to Figure 2;
Figure 7 is an explanatory drawing similar to Figure 2;
Figure 8 is an explanatory drawing similar to Figure 2;
Figure 9 is an explanatory drawing showing an example of an alignment chart representing a relationship of a rotation speed and a torque between an individual element of the power distribution and integration mechanism 40 and an individual element of a reduction gear mechanism 50 when a motor MG1 functions as a generator and a the motor MG2 functions as a motor;
Figure 10 is an explanatory drawing showing an example of an alignment chart representing a relationship of a rotation speed and a torque between an individual element of the power distribution and integration mechanism 40 and an individual element of the reduction gear mechanism 50 when the motor MG2 functions as a generator and the motor MG1 functions as a motor;
Figure 11 is an explanatory drawing showing a relationship between a gear ratio by the transmission 60 and power transmission efficiency in the hybrid vehicle 20 of the present embodiment;
Figure 12 is an explanatory drawing for explaining a motor drive mode in the hybrid vehicle 20 of the present embodiment;
Figure 13 is a schematic configuration view showing another transmission 100 which can be applied to the hybrid vehicle 20 of the present embodiment; and
Figure 14 is a schematic configuration view of a hybrid vehicle 20A which is a variation of the present embodiment.

### Best Mode for Carrying Out the Invention

Hereinafter, the best mode for carrying out the invention will be described with reference to embodiments.

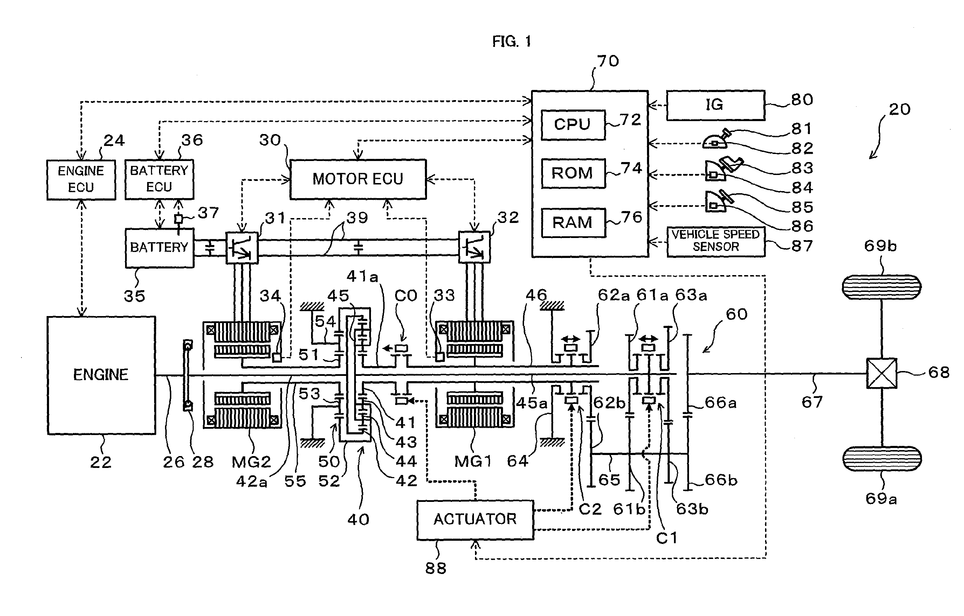

Figure 1 is a schematic configuration view of a hybrid vehicle 20 in accordance with a present embodiment of the present invention. The hybrid vehicle 20 shown in the same figure is configured as a rear-wheel-drive vehicle, and includes an engine 22 arranged in a vehicle front portion; a power distribution and integration mechanism (differential rotation mechanism) 40 connected to a crankshaft 26 which is an output shaft of the engine 22; a generatable motor MG1 connected to the power distribution and integration mechanism 40; a generatable motor MG2 arranged coaxially with the motor MG1 and connected to the power distribution and integration mechanism 40 through a reduction gear mechanism 50; a transmission 60 capable of transmitting power from the power distribution and integration mechanism 40 to a drive shaft 67 with a change in speed ratio; and a hybrid electronic control unit (hereinafter referred to as " hybrid ECU") 70 for controlling the entire hybrid vehicle 20 and the like.

The engine 22 is an internal combustion engine which outputs power by receiving a supply of a hydrocarbonaceous fuel such as gasoline and a diesel oil, and receives control of a fuel injection amount, an ignition timing, an intake air amount, and the like from an engine electronic control unit (hereinafter referred to as "engine ECU") 24. The engine ECU 24 receives signals from various kinds of sensors which are provided with respect to the engine 22 and detect an operating state of the engine 22. Moreover, the engine ECU 24 communicates with the hybrid ECU 70, controls the operation of the engine 22 based on control signals from the hybrid ECU 70 and signals from the above sensors, and outputs data about the operating state of the engine 22 to the hybrid ECU 70 as needed.

Each of the motor MG1 and the motor MG2 is configured as a known synchronous generator/motor which can operate not only as a generator, but also as a motor; and supplies and receives electric power to and from a battery 35 which is a secondary battery through inverters 31 and 32. Power lines 39 connecting the inverters 31 and 32 and the battery 35 are configured as a positive electrode bus line and a negative electrode bus line shared by the individual inverters 31 and 32; and are configured such that the power generated by one of the motors MG1 and MG2 can be consumed by the other motor. Therefore, the battery 35 is charged with electric power generated by one of the motors MG1 and MG2 and is discharged due to electric power shortage. If the electric power consumption and generation is balanced between the motors MG1 and MG2, the battery 35 is assumed to be neither charged nor discharged. Both the motors MG1 and MG2 are drive-controlled by a motor electronic control unit (hereinafter referred to as "motor ECU") 30. The motor ECU 30 receives a signal necessary for drive-controlling the motors MG1 and MG2, for example, a signal from rotational position detection sensors 33 and 34 for detecting a rotational position of a rotor of motors MG1 and MG2; and a phase current which is detected by a current sensor (not shown) and is applied to the motors MG1 and MG2. The motor ECU 30 outputs a switching control signal to inverters 31 and 32 and the like. The motor ECU 30 executes a rotation speed calculation routine (not shown) based on a signal inputted from the rotational position detection sensors 33 and 34, and calculates the rotation speeds Nm1 and Nm2 of rotors of the motors MG1 and MG2. Moreover, the motor ECU 30 communicates with the hybrid ECU 70, drive-controls the motors MG1 and MG2 based on control signals from the hybrid ECU 70, and outputs data about the operating states of the motors MG1 and MG2 to the hybrid ECU 70 as needed.

The battery 35 is managed by a battery electronic control unit (hereinafter referred to as (battery ECU) 36. The battery ECU 36 receives a signal necessary for managing the battery 35, for example, an inter-terminal voltage from a voltage sensor (not shown) provided between the terminals of the battery 35; a charge-discharge current from a current sensor (not shown) provided on the power line 39 connected to an output terminal of the battery 35; a battery temperature Tb from a temperature sensor 37 attached to the battery 35, and the like. The battery ECU 36 outputs data about a state of the battery 35 to the hybrid ECU 70 and the engine ECU 24 through communication as needed. Further, the battery ECU 36 calculates a state of charge (SOC) based on an integrated value of charge and discharge currents detected by the current sensor in order to manage the battery 35.

The power distribution and integration mechanism 40 is housed in a transmission case (not shown) together with the motors MG1 and MG2, the reduction gear mechanism 50, the transmission 60, and arranged coaxially with a crankshaft 26 spaced at a predetermined distance from the engine 22. The power distribution and integration mechanism 40 of the present embodiment is a double pinion planetary gear mechanism having a sun gear 41 which is an external gear; a ring gear 42 which is an internal gear arranged concentrically with the sun gear 41; a carrier 45 which rotatably and spinably holds at least one pair of two pinion gears 43 and 44 meshed with each other, one of which is meshed with the sun gear 41 and the other of which is meshed with the ring gear 42; and is configured such that the sun gear 41 (second element), the ring gear 42 (third element), and the carrier 45 (first element) can differentially rotate with each other. According to the present embodiment, the motor MG1 (hollow rotor) serving as the second motor is connected to the sun gear 41 which is a second element of the power distribution and integration mechanism 40 through a hollow sun gear shaft 41a extending from the sun gear 41 to an opposite side (rear part of the vehicle) of the engine 22 and a hollow first motor shaft 46. Moreover, the motor MG2 (hollow rotor) serving as the first motor is connected to the carrier 45 which is a first element through the reduction gear mechanism 50 provided between the power distribution and integration mechanism 40 and the engine 22 and a hollow second motor shaft 55 extending toward the engine 22 from the reduction gear mechanism 50 (sun gear 51). Further, a crankshaft 26 of the engine 22 is connected to the ring gear 42 which is a third element through the ring gear shaft 42a and a damper 28 extending through the second motor shaft 55 and the motor MG2.

Moreover, as shown in Figure 1, a clutch C0 (connection/disconnection device) is provided between the sun gear shaft 41a and the first motor shaft 46 so as to perform connection and disconnection therebetween. According to the present embodiment, the clutch C0 is configured, for example, as a dog clutch which can mesh a dog fixed to a leading edge of the sun gear shaft 41a with a dog fixed to a leading edge of the first motor shaft 46 and can also release the mesh therebetween with less loss; and is driven by an electric, electromagnetic, or hydraulic actuator 88. When the clutch C0 releases the connection between the sun gear shaft 41a and the first motor shaft 46, the connection between the motor MG1 serving as the second motor and the sun gear 41 which is a second element of the power distribution and integration mechanism 40 is also released accordingly. In short, the functions of the power distribution and integration mechanism 40 can subsequently disconnect the engine 22 from the motors MG1 and MG2 and the transmission 60.

As described above, the first motor shaft 46 which can be coupled to the sun gear 41 of the power distribution and integration mechanism 40 through the clutch C0 further extends from the motor MG1 to an opposite side (rear part of the vehicle) of the engine 22, and is connected to the transmission 60. Moreover, a carrier shaft (coupling shaft) 45a extends from the carrier 45 of the power distribution and integration mechanism 40 to an opposite side (rear part of the vehicle) of the engine 22 through the hollow sun gear shaft 41a and the first motor shaft 46, and the carrier shaft 45a is also connected to the transmission 60. Thereby, according to the present embodiment, the power distribution and integration mechanism 40 is provided between the motors MG1 and MG2 which are arranged coaxially with each other, and is arranged coaxially with both the motors MG1 and MG2; and the engine 22 is arranged coaxially with the motor MG2 and faces the transmission 60 with the power distribution and integration mechanism 40 therebetween. That is, according to the present embodiment, the components of the power output apparatus such as the engine 22, the motors MG1 and MG2, the power distribution and integration mechanism 40, and the transmission 60 are arranged starting with the engine 22, the motor MG2 (reduction gear mechanism 50), the power distribution and integration mechanism 40, the motor MG1, and the transmission 60 in that order starting at the front part of the vehicle. This allows the power output apparatus to be compact in size, excellent in mountability, preferable for the hybrid vehicle 20 which runs mainly by driving rear wheels.

Moreover, according to the present embodiment, as described above, the sun gear 41 which is a second element of the power distribution and integration mechanism 40 is connected to the transmission 60 through the sun gear shaft 41a, and clutch C0, and the first motor shaft 46; and the carrier 45 which is a first element of the power distribution and integration mechanism 40 is connected to the transmission 60 through the carrier shaft 45a. Thereby, according to the hybrid vehicle 20, one of the sun gear 41 and the carrier 45 of power distribution and integration mechanism 40 is set to a reaction element receiving a reaction of a torque outputted from the engine 22, and the other is set to an output element; and thereby power can be outputted to the transmission 60. If the sun gear 41 is set to the reaction element, the motor MG1 functions as a generator. In this case, the power distribution and integration mechanism 40 receives power from the engine 22 through the ring gear 42 and distributes the power to the sun gear 41 side and the carrier 45 side according to the gear ratio; integrates the power from the engine 22 and power from the motor MG2 functioning as a motor and outputs the integrated power to the carrier 45 side. If the carrier 45 is set to the reaction element, the motor MG2 functions as a generator. In this case, the power distribution and integration mechanism 40 receives power from the engine 22 through the ring gear 42 and distributes the power to the sun gear 41 side and the carrier 45 side according to the gear ratio; integrates the power from the engine 22 and the power from the motor MG1 functioning as a motor and outputs the integrated power to the sun gear 41 side.

The reduction gear mechanism 50 is a single pinion planetary gear mechanism having a sun gear 51 which is an external gear; a ring gear 52 which is an internal gear arranged concentrically with the sun gear 51; a plurality of pinion gears 53 which are meshed with both the sun gear 51 and the ring gear 52; and a carrier 54 which rotatably and spinably holds the plurality of pinion gears 53. The sun gear 51 of the reduction gear mechanism 50 is connected to a rotor of the motor MG2 through the above described second motor shaft 55. Moreover, the ring gear 52 of the reduction gear mechanism 50 is fixed to the carrier 45 of the power distribution and integration mechanism 40. Thereby, the reduction gear mechanism 50 is substantially integral with the power distribution and integration mechanism 40. The carrier 54 of the reduction gear mechanism 50 is fixed with respect to the transmission case. Therefore, by the operation of the reduction gear mechanism 50, the power from the motor MG2 is reduced in speed and is inputted to the carrier 45 of the power distribution and integration mechanism 40; and at the same time, the power from the carrier 45 is increased in speed and is inputted to the motor MG2. It should be noted that as shown in the present embodiment, the power output apparatus can be more compact by placing the reduction gear mechanism 50 between the motor MG2 and the power distribution and integration mechanism 40 so as to be formed integrally with the power distribution and integration mechanism 40.

The transmission 60 is configured as an automatic parallel shaft-type transmission capable of setting a speed ratio at a plurality of stages, and includes a first counter drive gear 61a and a first counter driven gear 61b constituting the first speed gear train; a second counter drive gear 62a and a second counter driven gear 62b constituting the second speed gear train; a third counter drive gear 63a and a third counter driven gear 63b constituting the third speed gear train; a fixing member 64 fixed to the transmission case; a countershaft 65 to which individual counter driven gears 61b to 63b and gear 66b are fixed; clutches C1 and C2; a gear 66a attached to the drive shaft 67; further a reverse gear train (not shown) and the like (hereinafter, as needed, the "counter drive gear" and the "counter driven gear" are simply referred to as the "gear"). It should be noted that in the transmission 60, the first speed gear train has a maximum gear ratio; changing to the second speed gear train and to the third speed gear train to which a minimum speed ratio is set reduces the gear ratio accordingly.

As shown in Figure 1, the first gear 61a of the first speed gear train is held rotatably and non-movably in the axial direction on the carrier shaft 45a extended from the carrier 45 which is the first element of the power distribution and integration mechanism 40 and is always meshed with the first gear 61b fixed to the countershaft 65. Likewise, the third gear 63a of the third speed gear train is also held rotatably and non-movably in the axial direction on the carrier shaft 45a, and is always meshed with the third gear 63b fixed to the countershaft 65. According to the present embodiment, the clutch C1 is provided on the carrier shaft 45a side (counter drive gear side) so as to selectively fix one of the first gear 61a (first speed gear train) and the third gear 63a (third speed gear train) to the carrier shaft 45a and to be able to rotatably release both the first gear 61a and the third gear 63a with respect to the carrier shaft 45a. According to the present embodiment, the clutch C1 is configured as, for example, a dog clutch which can mesh a dog which is held non-rotatably and movably in the axial direction on the carrier shaft 45a with one of the dog fixed to the first gear 61a and the dog fixed to the third gear 63a with less loss, and can release the mesh therebetween; and is driven by the above described actuator 88. These gears 61a and 61b of the first speed gear train, the gear 63a and 63b of the third speed gear train, and the clutch C1 constitute a first transmission mechanism of the transmission 60. Moreover, the second gear 62a of the second speed gear train is held rotatably and non-movably in the axial direction on the first motor shaft 46 which can be coupled with the sun gear 41 which is a second element of the power distribution and integration mechanism 40 through the clutch C0; and is always meshed with the second gear 62b fixed to the countershaft 65. The fixing member 64 fixed to an inner periphery of the transmission case is located between the second speed gear train consisting of the second gears 62a and 62b and the motor MG1. According to the present embodiment, the clutch C2 is provided at the first motor shaft 46 side (counter drive gear side) so as to selectively fix one of the second gear 62a (second speed gear train) and the fixing member 64 with respect to the first motor shaft 46 and to rotatably release both the second gear 62a and the fixing member 64 with respect to the first motor shaft 46. According to the present embodiment, the clutch C2 is also configured as, for example, a dog clutch which can mesh a dog which is held non-rotatably and movably in the axial direction on the first motor shaft 46 with one of the dog fixed to the second gear 62a and the dog fixed to the fixing member 64 with less loss, and can release the mesh therebetween; and is driven by the above described actuator 88. These gears 62a and 62b of the second speed gear train, the fixing member 64, and the clutch C2 constitute a second transmission mechanism of the transmission 60. It should be noted that according to the present embodiment, the actuator 88 is illustrated as a single unit, but it is obvious that the clutches C0, C1, and C2 may be driven individually.

According to the transmission 60 configured as described above, when the clutch C2 is released, and the clutch C1 is used to fix one of the first gear 61a (first speed gear train) and the third gear 63a (third speed gear train) to the carrier shaft 45a, power from the carrier shaft 45a can be transmitted to the countershaft 65 through the first gear 61a (first speed gear train) or the third gear 63a (third speed gear train). Moreover, when the clutch C0 is connected, the clutch C1 is released, and the clutch C2 is used to fix the second gear 62a (second speed gear train) to the first motor shaft 46, power from the first motor shaft 46 can be transmitted to the countershaft 65 through the second gear 62a (second speed gear train). Moreover, power transmitted from the carrier shaft 45a or the first motor shaft 46 to the countershaft 65 is transmitted to the drive shaft 67 through the gears 66a and 66b and is finally outputted to the rear wheels 69a and 69b as the drive wheels through the differential gear 68.
Hereinafter, as needed, a state of transmitting power using the first speed gear train is referred to as "first speed state (1st speed)", a state of transmitting power using the second speed gear train is referred to as "second speed state (2nd speed)", and a state of transmitting power using the third speed gear train is referred to as "third speed state (3rd speed)". Moreover, according to the transmission 60 of the present embodiment, the clutches C1 and C2 are provided on the carrier shaft 45a and the first motor shaft 46 side, and thus, it is possible to reduce the loss when the clutches C1 and C2 are used to fix the gears 61a to 63a to the carrier shaft 45a or the first motor shaft 46. That is, depending on the gear ratio of an individual gear train, particularly about the first transmission mechanism including the third speed gear train having a small reduction gear ratio, the rotation speed of the third gear 63a which is idle before being fixed to the first motor shaft 46 by the clutch C1 is lower than the rotation speed of the corresponding third gear 63b on the countershaft 65 side. Therefore, a dog of the third gear 63a can be engaged with a dog of the carrier shaft 45a with less loss by at least installing the clutch C1 on the carrier shaft 45a side.

The hybrid ECU 70 is configured as a microprocessor around a CPU 72, and in addition to the CPU 72, includes a ROM 74 for storing a processing program; a RAM 76 for temporarily storing data; an input/output port (not shown); and a communication port (not shown). The hybrid ECU 70 receives an ignition signal from an ignition switch (start switch) 80; a shift position SP from a shift position sensor 82 for detecting the shift position SP which is an operation position of a shift lever 81; an accelerator opening Acc from an accelerator pedal position sensor 84 for detecting the amount of depression of an accelerator pedal 83; a brake pedal position BP from a brake pedal position sensor 86 for detecting the amount of depression of a brake pedal 85; and a vehicle speed V from a vehicle speed sensor 87 through the input port. As described above, the hybrid ECU 70 is connected to the engine ECU 24, the motor ECU 30, and the battery ECU 36 through a communication port, and sends and receives various kinds of control signals and data to and from the engine ECU 24, the motor ECU 30, and the battery ECU 36. Moreover, the hybrid ECU 70 also controls the actuator 88 which drives the clutch C0, and the clutches C1 and C2 of the transmission 60.

Next, the operation of the hybrid vehicle 20 of the present embodiment configured as described above will be described.

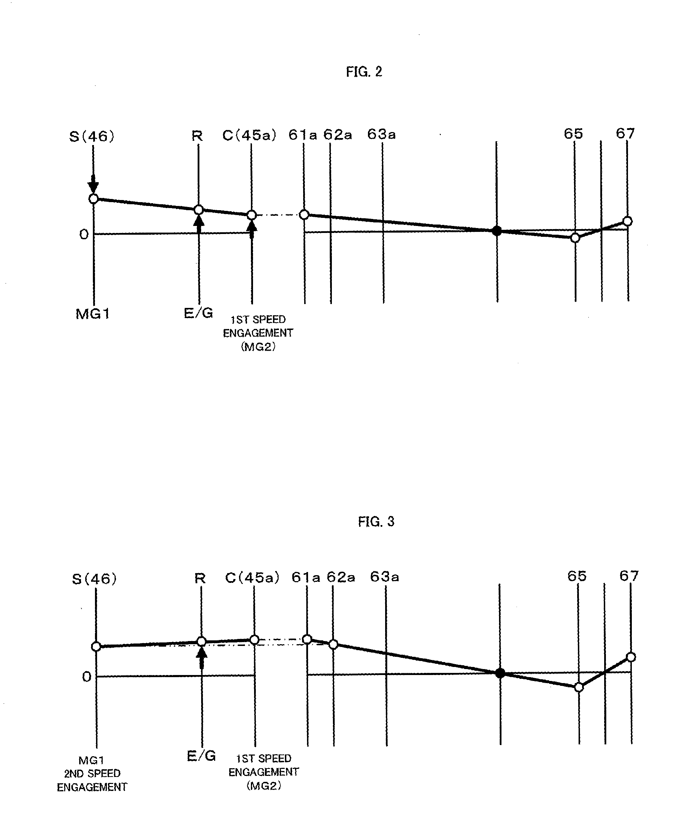

Figures 2 to 8 are explanatory drawings, each showing a relationship of a rotation speed and a torque of major elements of the power distribution and integration mechanism 40 and the transmission 60 when the gear ratio of the transmission 60 is changed in a shift up direction according to a vehicle speed change when the hybrid vehicle 20 runs with an operation of the engine 22. When the hybrid vehicle 20 runs in a state shown in Figures 2 to 8, under the overall control of the hybrid ECU 70 based on the amount of depression of the accelerator pedal 83 and the vehicle speed V, the engine ECU 24 controls the engine 22, the motor ECU 30 controls the motors MG1 and MG2, and the hybrid ECU 70 directly controls the actuator 88(clutch C0, and the clutches C1 and C2 of the transmission 60). It should be noted that with reference to Figures 2 to 8, the S axis indicates a rotation speed (rotation speed Nm1 of the motor MG1, namely, the first motor shaft 46) of the sun gear 41 of the power distribution and integration mechanism 40; the R axis indicates a rotation speed (rotation speed Ne of the engine 22) of the ring gear 42 of the power distribution and integration mechanism 40; and the C axis indicates a rotation speed of the carrier 45 of the power distribution and integration mechanism 40 (ring gear 52 of the carrier shaft 45a and the reduction gear mechanism 50) respectively. Moreover, the 61a axis to 63a axis, the 65 axis, and the 67 axis each indicate a rotation speed of the first gear 64a to the third gear 63a of the transmission 60, the countershaft 65, and the drive shaft 67 respectively.

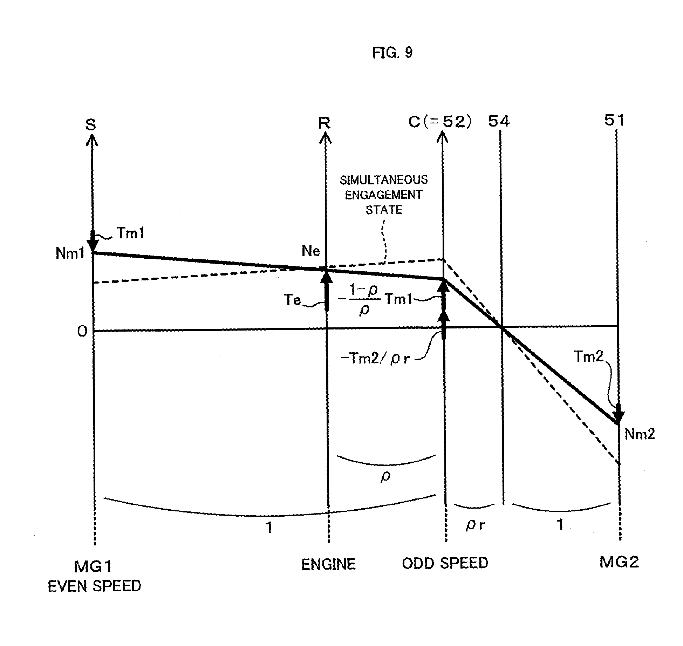

As shown in Figure 2, when the hybrid vehicle 20 starts moving, the clutch C0 is connected and the clutch C2 of the transmission 60 is released. In the same figure, as shown by the one-dot chain line, the clutch C1 is used to fix the first gear 61a (first speed gear train) to the carrier shaft 45a (carrier 45). Thereby, the motors MG1 and MG2 can be drive-controlled such that the carrier 45 of the power distribution and integration mechanism 40 becomes an output element, the motor MG2 connected to the carrier 45 functions as a motor, and the motor MG1 connected to the sun gear 41 which becomes a reaction element thereof functions as a generator. Hereinafter, a mode in which the motor MG1 functions as a generator and the motor MG2 functions as a motor is referred to as "first torque conversion mode". Figure 9 shows an example of an alignment chart representing a relationship of a rotation speed and a torque between an individual element of the power distribution and integration mechanism 40 and an individual element of the reduction gear mechanism 50 in the first torque conversion mode. It should be noted that in the Figure 9, the S axis, the R axis, and the C axis denote like elements shown in Figures 2 to 8; the 54 axis denotes a rotation speed of the carrier 54 of the reduction gear mechanism 50; the 51 axis denotes a rotation speed (rotation speed Nm2 of the motor MG2, namely, the second motor shaft 55) of the sun gear 51 of the reduction gear mechanism 50; p denotes a gear ratio (the number of teeth of the sun gear 41/the number of teeth of the ring gear 42) of the power distribution and integration mechanism 40; and pr denotes a reduction gear ratio (the number of teeth of the sun gear 51/the number of teeth of the ring gear 52) of the reduction gear mechanism 50 respectively.
In the first torque conversion mode, the power distribution and integration mechanism 40 and the motor MG1 and MG2 perform a torque conversion on power from the engine 22 and output the power to the carrier 45; and the ratio between the rotation speed of the engine 22 and the rotation speed of the carrier 45 which is an output element thereof can be changed steplessly and continuously by controlling the rotation speed of the motor MG1. Then, the power outputted to the carrier 45 (carrier shaft 45a) is changed (reduced) in speed based on the speed ratio of the first speed gear train (first gears 61a and 61b) and is outputted to the drive shaft 67.

In a state shown in Figure 2, namely, the first speed state in which the first speed gear train is selected, when the vehicle speed V of the hybrid vehicle 20 is increased, the rotation speed of the motor MG1 which is a generator is decreased, and finally the rotation speed of the first motor shaft 46 is approximately matched to the rotation speed of the second gear 62a which is meshed with the second gear 62b of the countershaft 65. This enables a change from the first speed state (first speed gear train) to the second speed state (second speed gear train). When the state is changed from the first speed state to the second speed state, as shown by the one-dot chain line and the two-dot chain line in Figure 3, the clutch C1 is used to fix the first gear 61a (first speed gear train) to the carrier shaft 45a (carrier 45), the clutch C2 is used to fix the second gear 62a (second speed gear train) to the first motor shaft 46 (sun gear 41), and a torque command to the motors MG1 and MG2 is set to a value of 0. In this state, the motors MG1 and MG2 are idle without performing the power operation or the regenerative operation, and power (torque) from the engine 22 is mechanically (directly) transmitted to the drive shaft 67 without conversion to electrical energy at a fixed (constant) speed ratio (value between a speed ratio of the first speed gear train and a speed ratio of the second speed gear train). Hereinafter, the mode in which both the sun gear 41 which is a second element of the power distribution and integration mechanism 40 and the carrier 45 which is a first element thereof are coupled to the drive shaft 67 by the transmission 60 is referred to as a "simultaneous engagement mode". In particular, the state shown in Figure 3 is referred to as a "first to second simultaneous engagement state".

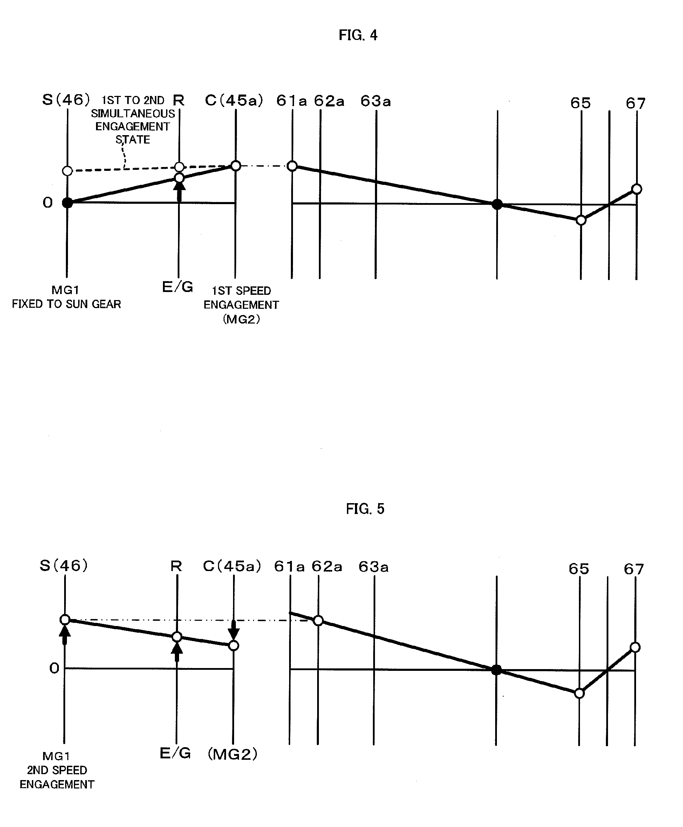

Moreover, according to the present embodiment, when the rotation speed of the motor MG1 which is a generator is further reduced from the first speed state shown in Figure 2, the rotation speed of the first motor shaft 46 comes close to a value of 0; and further, as shown in Figure 4, the clutch C1 is used to fix the first gear 61a (first speed gear train) to the carrier shaft 45a (carrier 45), the clutch C2 is used to couple the fixing member 64 to the first motor shaft 46 (sun gear 41), and the first motor shaft 46, namely, the sun gear 41 which is a second element of the power distribution and integration mechanism 40 can be non-rotatably fixed to the transmission case. In this state, when a torque command to the motors MG1 and MG2 is set to a value of 0, the motors MG1 and MG2 are idle without performing the power operation or the regenerative operation, and power (torque) from the engine 22 is mechanically (directly) transmitted to the drive shaft 67 without conversion to electrical energy at a fixed (constant) speed ratio different from the speed ratio in the above described first to second simultaneous engagement state. Hereinafter, the mode in which the carrier 45 which is a first element of the power distribution and integration mechanism 40 is coupled to the drive shaft 67 through the first speed gear train and the clutch C2 is used to non-rotatably fix the sun gear 41 which is a second element thereof is also referred to as the "simultaneous engagement mode". In particular, the state shown in Figure 4 is referred to as a "1st speed fixed state".

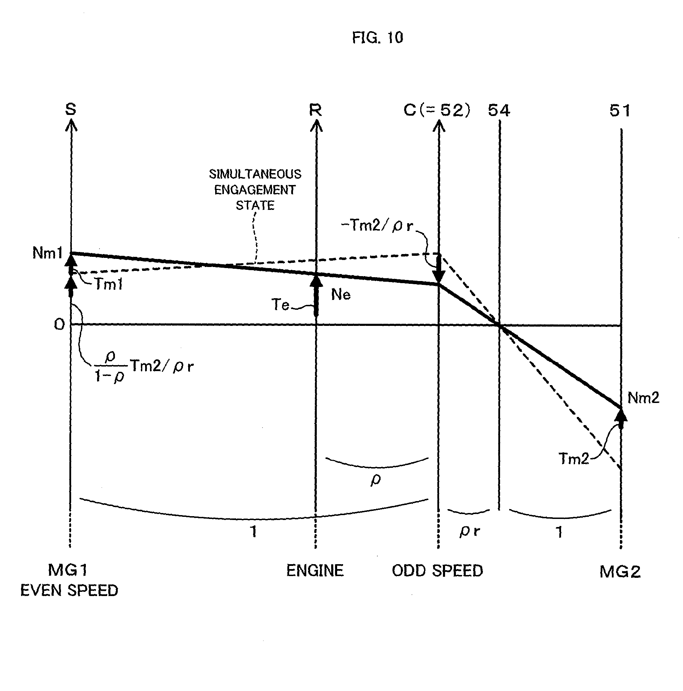

On the contrary, when the clutch C1 is released in the first to second simultaneous engagement state shown in Figure 3, as shown by the two-dot chain line in Figure 5, only the second gear 62a (second speed gear train) is fixed to the first motor shaft 46 (sun gear 41) by the clutch C2. Thereby, the motors MG1 and MG2 can be drive-controlled such that the sun gear 41 of the power distribution and integration mechanism 40 becomes an output element, the motor MG1 connected to the sun gear 41 functions as a motor, and the motor MG2 connected to the carrier 45 which becomes a reaction element functions as a generator. Hereinafter, a mode in which the motor MG2 functions as a generator and the motor MG1 functions as a motor is referred to as a "second torque conversion mode". Figure 10 shows an example of an alignment chart representing a relationship of a rotation speed and a torque between an individual element of the power distribution and integration mechanism 40 and an individual element of the reduction gear mechanism 50 in the second torque conversion mode. In the second torque conversion mode, the power distribution and integration mechanism 40 and the motors MG1 and MG2 perform a torque conversion on power from the engine 22 and output the power to the sun gear 41, and the ratio between the rotation speed of the engine 22 and the rotation speed of the sun gear 41 which is an output element can be changed steplessly and continuously by controlling the rotation speed of the motor MG2. Then, the power outputted to the sun gear 41 (first motor shaft 46) is changed (reduced) in speed based on the speed ratio of the second speed gear train (second gears 62a and 62b) and is outputted to the drive shaft 67. It should be noted that the reference characters in Figure 10 are the same as in Figure 2.

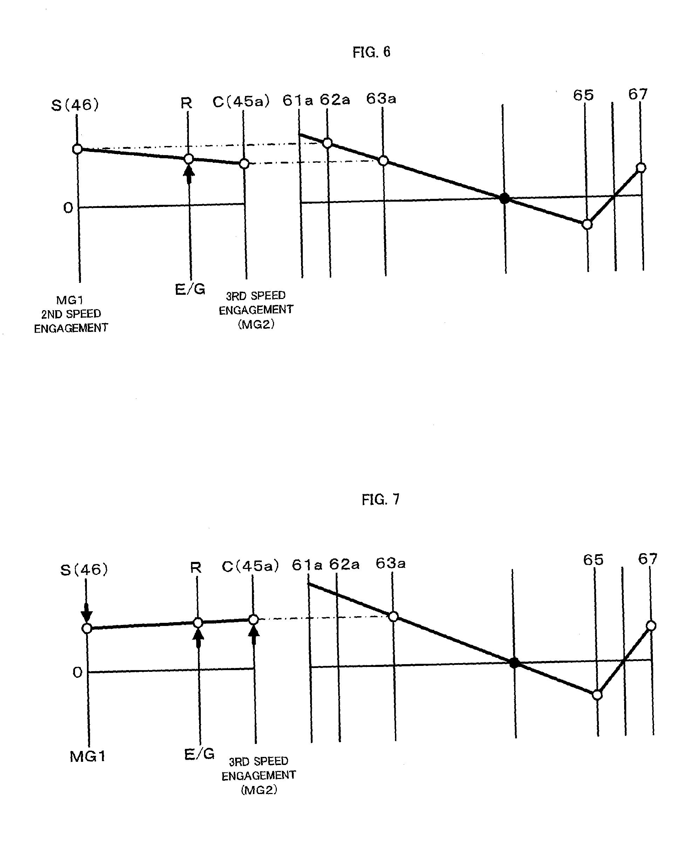

In a state shown in Figure 5, namely, the second speed state in which the second speed gear train is selected, when the vehicle speed V of the hybrid vehicle 20 is increased, the rotation speed of the motor MG2 which is a generator is decreased, and finally the rotation speed of the carrier shaft 45a is approximately matched to the rotation speed of the third gear 63a which is meshed with the third gear 63b of the countershaft 65. This enables a change from the second speed state (second speed gear train) to the third speed state (third speed gear train). When the state is changed from the second speed state to the third speed state, as shown by the one-dot chain line and the two-dot chain line in Figure 6, the clutch C2 is used to fix the second gear 62a (second speed gear train) to the first motor shaft 46 (sun gear 41), the clutch C1 is used to fix the third gear 63a (third speed gear train) to the carrier shaft 45a (carrier 45), and a torque command to the motors MG1 and MG2 is set to a value of 0. In this state as well as in the above described simultaneous engagement mode, the motors MG1 and MG2 are idle without performing the power operation or the regenerative operation, and power (torque) from the engine 22 is mechanically (directly) transmitted to the drive shaft 67 without conversion to electrical energy at a fixed (constant) speed ratio (value between a speed ratio of the second speed gear train and a speed ratio of the third speed gear train) different from the speed ratio in the first to second simultaneous engagement state and the 1st speed fixed state. Hereinafter, the state shown in Figure 6 is referred to as a "second to third simultaneous engagement state".

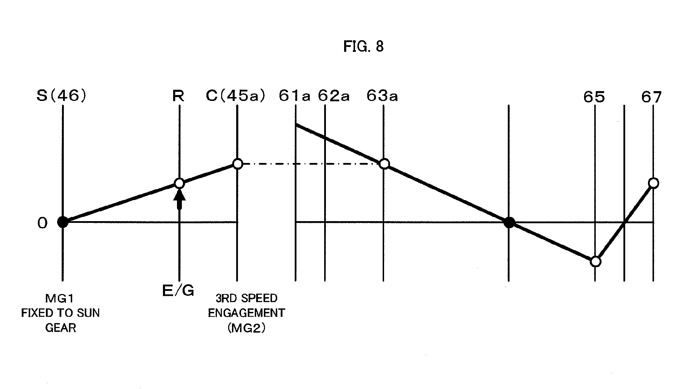

In the second to third simultaneous engagement state shown in Figure 6, when the clutch C2 is released, as shown by the one-dot chain line in Figure 7, only the third gear 63a (third speed gear train) is fixed to the carrier shaft 45a (carrier 45) by the clutch C1, and the state is changed to the above described first torque conversion mode again. In this case, the power outputted to the carrier 45 (carrier shaft 45a) is changed in speed based on the speed ratio (minimum speed ratio) of the third speed gear train (third gears 63a and 63b) and is output to the drive shaft 67. Then, when the vehicle speed V of the hybrid vehicle 20 is increased in the third speed state in which the third speed gear train is selected, the rotation speed of the motor MG1 which is a generator is decreased. If the rotation speed of the motor MG1 continues to decrease, finally the rotation speed of the first motor shaft 46 comes close to a value of 0. Subsequently, when the rotation speed of the first motor shaft 46 becomes approximately a value of 0, as shown in Figure 8, the first motor shaft 46, namely, the sun gear 41 which is a second element of the power distribution and integration mechanism 40 can be non-rotatably fixed to the transmission case by using the clutch C1 to fix the third gear 63a (third speed gear train) to the carrier shaft 45a (carrier 45), and by using the clutch C2 to couple the fixing member 64 to the first motor shaft 46 (sun gear 41). In this state, when a torque command to the motors MG1 and MG2 is set to a value of 0, the motors MG1 and MG2 are idle without performing the power operation or the regenerative operation, and power (torque) from the engine 22 is mechanically (directly) transmitted to the drive shaft 67 without conversion to electrical energy at a fixed (constant) speed ratio different from the speed ratio of the above described first to second simultaneous engagement state, the 1st speed fixed state, and the second to third simultaneous engagement state. Hereinafter, the mode in which the carrier 45 which is a first element of the power distribution and integration mechanism 40 is couple to the drive shaft 67 through the third speed gear train to which a minimum speed ratio and the clutch C2 is used to non-rotatably fix the sun gear 41 which is a second element thereof is set is also referred to as the "simultaneous engagement mode". In particular, the state shown in Figure 8 is referred to as a "3rd speed fixed state". It should be noted that when the speed ratio of the transmission 60 is changed in the shift down direction, the reverse procedure described above may be basically followed.

As described above, according to the hybrid vehicle 20 of the present embodiment, with the change in speed ratio of the transmission 60, the first torque conversion mode and the second torque conversion mode are alternately switched; and thus, particularly when the rotation speed Nm2 or Nm1 of the motor MG2 or MG1 which functions as a motor is increased, the rotation speed Nm1 or Nm2 of the motor MG1 or MG2 which functions as a generator can be prevented from having a negative value. Therefore, the hybrid vehicle 20 can suppress the occurrence of a power circulation in which as the rotation speed of the motor MG1 becomes negative in the first torque conversion mode, the motor MG2 uses part of the power outputted to the carrier shaft 45a to generate electric power and the motor MG1 consumes the electric power generated by the motor MG2 and outputs the power; and a power circulation in which as the rotation speed of the motor MG2 becomes negative in the second torque conversion mode, the motor MG1 uses part of the power outputted to the first motor shaft 46 to generate electric power and the motor MG2 consumes the electric power generated by the motor MG1 and outputs the power; and can improve power transmission efficiency in a wider driving area. Moreover, as such a power circulation is suppressed, a maximum rotation speed of the motors MG1 and MG2 can also be suppressed, and thereby the motors MG1 and MG2 can be made compact. Further, according to the hybrid vehicle 20 of the present embodiment, before the speed ratio of the transmission 60 is changed, the simultaneous engagement mode is performed between the first torque conversion mode and the second torque conversion mode; thus, a so-called torque loss does not occur at the time of change in speed ratio, and the change in speed ratio, namely, the switching between the first torque conversion mode and the second torque conversion mode can be performed very smoothly and without a shock.

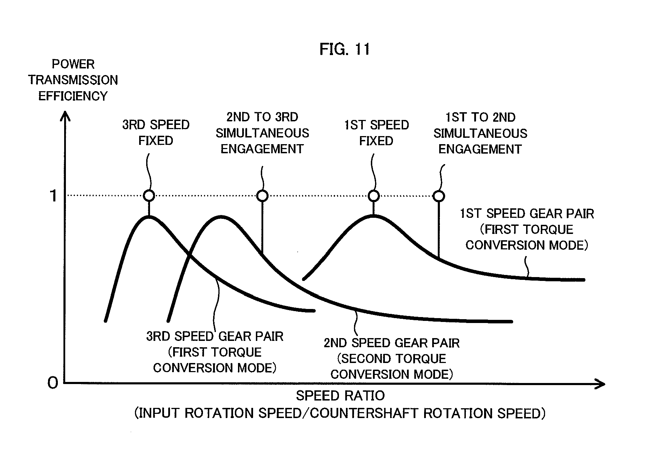

Moreover, when the hybrid vehicle 20 runs in the above described simultaneous engagement mode, power from the engine 22 can be mechanically (directly) transmitted to the drive shaft 67 at a speed ratio specific to each of the 1st to 2nd speed simultaneous engagement state, the 1st speed fixed state, the 2nd to 3rd speed simultaneous engagement state, and the 3rd speed fixed state. Thereby, as shown in Figure 11, a chance of mechanically outputting power from the engine 22 to the drive shaft 67 without conversion to electrical energy, namely, a chance of setting the power transmission efficiency to a theoretical value of 1 can be increased and the power transmission efficiency can be further increased in a wider driving area. In general, according to a power output apparatus using the engine, two motors, and the power distribution and integration mechanism such as a planetary gear mechanism, when the reduction gear ratio between the engine and the drive shaft is relatively large, more engine power is converted to electrical energy, and thus the power transmission efficiency is deteriorated, and the motors MG1 and MG2 tend to generate heat. Therefore, the above described simultaneous engagement mode is advantageous particularly when the reduction gear ratio between the engine 22 and the drive shaft is relatively large. According to the hybrid vehicle 20 of the present embodiment, while the first transmission mechanism capable of setting a minimum speed ratio (3rd speed) of the transmission 60 is transmitting power from the carrier 45 which is a first element of the power distribution and integration mechanism 40 to the drive shaft 67 at the minimum speed ratio (3rd speed), the sun gear 41 which is a second element of the power distribution and integration mechanism 40 which is not connected to the first transmission mechanism can be non-rotatably fixed by the clutch C2 serving as a rotation fixing device. Thereby, when the rotation speed of the drive shaft 67 is relatively high, namely, when the vehicle speed V is relatively high, power from the engine 22 can be mechanically effectively transmitted to the drive shaft 67, and thus fuel efficiency at a high vehicle speed can be improved. Further, in the first torque conversion mode in which the transmission 60 can be set to the above described first speed state (1st speed) and the third speed state (3rd speed), power transmission efficiency becomes the highest when the rotation speed of the motor MG1 and the sun gear 41 is near of a value of 0 (see the peaks of curves corresponding to the 3rd speed gear pair and the 1st speed gear pair in Figure 11). Therefore, when the rotation speed of the motor MG1 and the sun gear 41 is near a value of 0, the clutch C2 is used to non-rotatably fix the sun gear 41 to set the transmission 60 to the 1st speed fixed state or the 3rd speed fixed state. By doing so, as understood from Figure 11, when the clutch C2 is released to return to the first speed state or the third speed state, power transmission efficiency can be maintained in a relatively high state. As a result, the hybrid vehicle 20 can further improve power transmission efficiency in a wider driving area.

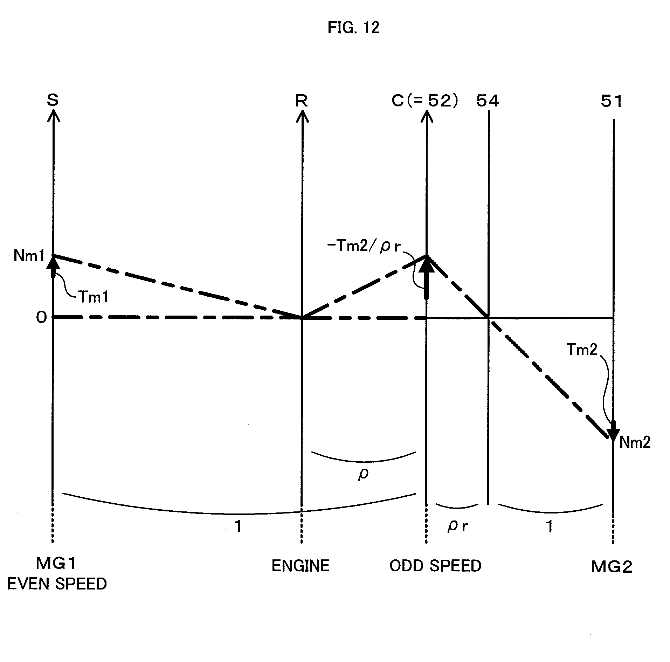

Subsequently, with reference to Figure 12, a motor drive mode will be described, in which, in a state of stopping the engine 22, the electric power from the battery 35 is used to cause the motor MG1 and the motor MG2 to output power, by which the hybrid vehicle 20 is driven. According to the hybrid vehicle 20 of the present embodiment, the motor drive mode is broadly classified into a first motor drive mode in which only the motor MG2 is caused to output the power, a second motor drive mode in which only the motor MG1 is caused to output the power, and a third motor drive mode in which both the motors MG1 and MG2 are caused to output the power. When the first motor drive mode is performed, only the motor MG2 is drive-controlled, for example, by releasing the clutch C0 and the clutch C2 of the transmission 60, and by using the clutch C1 to fix the first gear 61a of the first speed gear train or the third gear 63a of the third speed gear train to the carrier shaft 45a. Then, as shown by the one-dot chain line in Figure 12, power is outputted from the motor MG2 to the carrier 45, and the power is transmitted to the drive shaft 67 through the carrier shaft 45a, the first speed gear train, the third speed gear train, or the like. At this time, since the clutch C0 is released, and the connection between the sun gear 41 and the first motor shaft 46 is released, the crankshaft 26 of the engine 22 which is stopped by a function of the power distribution and integration mechanism 40 is prevented from corotating; since the clutch C2 is released, the motor MG1 is prevented from corotating (see the one-dot chain line in Figure 12); and thereby, the power transmission efficiency can be suppressed from decreasing. When the second motor drive mode is performed, only the motor MG1 is drive-controlled, for example, by releasing the clutch C0 and the clutch C1 of the transmission 60, and by using the clutch C2 to fix the second gear 62a of the second speed gear train to the first motor shaft 46. Then, as shown by the two-dot chain line in Figure 12, power is outputted from the motor MG1 to the sun gear 41, and the power is transmitted to the drive shaft 67 through the sun gear shaft 41a, the first motor shaft 46, the second speed gear train, and the like. At this time, since the clutch C0 is released, and the connection between the sun gear 41 and the first motor shaft 46 is released, the crankshaft 26 of the engine 22 which is stopped by a function of the power distribution and integration mechanism 40 is prevented from corotating; since the clutch C1 is released, the motor MG2 is prevented from corotating (see the two-dot chain line in Figure 12); and thereby, the power transmission efficiency can be suppressed from decreasing. Further, when the third motor drive mode is performed, both the motors MG1 and MG2 are drive-controlled, by using the clutches C1 and C2 to set the transmission 60 to the above described 1st-2nd speed simultaneous engagement state or the 2nd-3rd speed simultaneous engagement state. Therefore, a large power can be transmitted to the drive shaft 67 in a motor drive mode by causing both the motors MG1 and MG2 to output the power, and thus the towing capability and the like at the motor drive can well be maintained. It should be noted that obviously in the first motor drive mode and the second motor drive mode, one of the motors MG1 and MG2 may be caused to output the power in a state in which the other stopped motor MG1 or MG2 is corotating while the clutch C0 is being connected (see the broken line in Figure 12).

According to the hybrid vehicle 20 of the present embodiment, power can be effectively transmitted to the drive shaft 67 by changing the mode between the first to third motor drive modes to change the speed ratio of the transmission 60 for the motor drive. That is, when the speed ratio of the transmission 60 is changed in the shift up side in the first motor drive mode in which the clutch C1 is used to fix the first gear 61a of the first speed gear train to the carrier shaft 45a and only the motor MG2 is drive-controlled, first, the rotation speed of the motor MG1 is synchronized with the rotation speed of the second gear 62a of the second speed gear train. Next, when the clutch C2 is used to fix the second gear 62a to the first motor shaft 46, the mode can be changed to the third motor drive mode, namely, the above described 1st-2nd speed simultaneous engagement state. Afterward, when the clutch C1 is released, the mode can be changed to the second motor drive mode in which only the motor MG1 is drive-controlled, and when the clutch C2 is used to fix the second gear 62a of the second speed gear train to the first motor shaft 46, the speed ratio of the transmission 60 can be changed to the shift up side (2nd speed). When the clutch C2 is used to fix the second gear 62a of the second speed gear train to the first motor shaft 46 and the speed ratio of the transmission 60 is changed to the shift up side in the second motor drive mode in which only the motor MG1 is drive-controlled, first, the rotation speed of the motor MG2 is synchronized with the rotation speed of the third gear 63a of the third speed gear train. Next, when the clutch C1 is used to fix the third gear 63a to the carrier shaft 45a, the mode can be changed to the third motor drive mode, namely, the above described 2nd-3rd speed simultaneous engagement state. Afterward, when the clutch C2 is released, the mode is changed to the first motor drive mode in which only the motor MG2 is drive-controlled, and when the clutch C1 is used to fix the third gear 63a of the third speed gear train to the carrier shaft 45a, the speed ratio of the transmission 60 can be changed to the shift up side (3rd speed). As a result, according to the hybrid vehicle 20 of the present embodiment, even in the motor drive mode, the transmission 60 can be used to decrease the rotation speed of the carrier shaft 45a and the first motor shaft 46 to increase the torque. Therefore, the maximum torque required for the motors MG1 and MG2 can be decreased and thus the motors MG1 and MG2 can be made compact. Moreover, before the speed ratio of the transmission 60 in such a motor drive, is changed, the third motor drive mode, namely, the simultaneous engagement mode is performed, and thus, a so-called torque loss does not occur at the time of change in speed ratio, and the speed ratio can be changed very smoothly and without a shock.

It should be noted that in order to change the speed ratio of the transmission 60 in the shift down direction in the motor drive mode, the reverse procedure described above may be basically followed. Moreover, when a required driving force is increased in the first motor drive mode in which only the motor MG2 is caused to output power, or in the second motor drive mode in which only the motor MG1 is caused to output power, or when the state of charge (SOC) of the battery 35 is decreased, one of the motors MG1 and MG2, whichever has not output power, is drive-controlled to synchronize the rotation speed Nm1 or Nm2 with the rotation speed of the sun gear 41 or the carrier 45 of the power distribution and integration mechanism 40 and then the engine 22 may be started by connecting the clutch C0 to cause the motor MG1 or MG2 to perform motoring of the engine 22. This allows the power to be smoothly transmitted to the drive shaft 67 to start the engine 22. Further, when the engine 22 is started in the third motor drive mode in which both the motors MG1 and MG2 are caused to output power, first, one of the motors MG1 and MG2, whichever is caused to continuously output power according to the target speed ratio of the transmission 60 and the like, is selected, and then, a power transfer process is performed, which causes the selected motor MG1 or MG2 to output the power of the other motor MG2 or MG1, whichever is caused not to continuously output power. Then, after the power transfer process is completed, the other motor MG2 or MG1, whichever is caused not to continuously output power is disconnected from the transmission 60 by releasing the clutch C2 or C1; then, the other motor MG2 or MG1 is drive-controlled to synchronize the rotation speed Nm2 or Nm1 thereof with the rotation speed of the carrier 45 or the sun gear 41 of the power distribution and integration mechanism 40; then, the clutch C0 is connected; then the motor MG2 or MG1 is caused to perform motoring of the engine 22; and then, the engine 22 may be started in that order. This allows the power to be smoothly transmitted to the drive shaft 67 to start the engine 22. Moreover, in the first motor drive mode and the second motor drive mode, in a state of corotating one of the motors MG1 and MG2, whichever is stopped with the clutch C0 being connected, when the other motor MG1 or MG2 is caused to output power, the engine 22 may be started by causing the stopped motor MG1 or MG2 to perform motoring of the engine 22.

As described above, according to the hybrid vehicle 20 of the present embodiment, non-rotatably fixing the sun gear 41 which is a second element of the power distribution and integration mechanism 40 by the clutch C2 as a rotation fixing device allows the power from the engine 22 to be mechanically (directly) outputted from the carrier 45 (first element) which becomes an output element thereof to the transmission 60 without conversion to electrical energy. This allows the power from the engine 22 to be mechanically transmitted to the drive shaft through the power distribution and integration mechanism and the transmission 60. Moreover, according to the hybrid vehicle 20, since the power transmission efficiency is relatively high when the rotation speed of the sun gear 41 (motor MG1) which is the second element thereof is near a value of 0 in the first torque conversion mode, non-rotatably fixing the sun gear 41 by the clutch C2 when the rotation speed of the sun gear 41 is near a value of 0 allows the power transmission efficiency to be maintained relatively high even when the sun gear 41 is released from non-rotatably fixing by the clutch C2. As a result, the hybrid vehicle 20 can well improve the power transmission efficiency in a wider driving area. Moreover, according to the hybrid vehicle 20 of the present embodiment, when the first transmission mechanism capable of setting a minimum speed ratio (3rd speed) of the transmission 60 transmits power from the carrier 45 which is a first element of the power distribution and integration mechanism 40 to the drive shaft 67 at the minimum speed ratio (3rd speed), the sun gear 41 which is a second element of the power distribution and integration mechanism 40 which is not connected to the first transmission mechanism can be non-rotatably fixed thereto by the clutch C2 as a rotation fixing device. Thereby, when the vehicle speed V is relatively high, power from the engine 22 can be mechanically effectively transmitted to the drive shaft 67, and thus fuel efficiency at a high vehicle speed can be improved.

Further, the transmission 60 provided in the hybrid vehicle 20 of the present embodiment includes a first transmission mechanism having at least a parallel shaft-type gear trains capable of coupling the carrier 45 (carrier shaft 45a) which is the first element of the power distribution and integration mechanism 40 to the drive shaft 67; and a second transmission mechanism having at least a parallel shaft-type gear trains capable of coupling the sun gear 41 (first motor shaft 46) which is the second element thereof to the drive shaft 67; and can selectively transmit the power from the carrier 45 and the sun gear 41 to the drive shaft 67. Therefore, the hybrid vehicle 20 can suppress the power circulation by switching the above described mode between the first torque conversion mode and the second torque conversion mode, and thus, can improve the power transmission efficiency in a wider driving area. Further, since driving the hybrid vehicle 20 in the above described 1st-2nd speed simultaneous engagement state and the 2nd-3rd speed simultaneous engagement state allows the power from the engine 22 to be mechanically transmitted to the drive shaft 67 at a fixed speed ratio different from the speed ratio in the above described 1st speed fixed state and the 3rd speed fixed state, a chance of mechanically outputting power from the engine 22 to the drive shaft 67 without conversion to electrical energy can be increased and the power transmission efficiency can be further increased in a wider driving area. As a result, the hybrid vehicle 20 can well improve the fuel efficiency and the drive performance.

Moreover, the hybrid vehicle 20 of the present embodiment has a clutch C0 which performs the connection between the sun gear shaft 41a and the first motor shaft 46, namely, between the sun gear 41 and the motor MG1, and releases the connection therebetween. Thereby, according to the hybrid vehicle 20, when the clutch C0 is used to release the connection between the sun gear shaft 41a and the first motor shaft 46, a function of the power distribution and integration mechanism 40 can substantially disconnect the engine 22 from the motors MG1 and MG2 and the transmission 60. Therefore, according to the hybrid vehicle 20, when the clutch C0 is released and the engine 22 is stopped, power from at least one of the motors MG1 and MG2 can be effectively transmitted to the drive shaft 67 with a change of the speed ratio of the transmission 60. As a result, the hybrid vehicle 20 can decrease the maximum torque required for the motors MG1 and MG2 and thus, the motors MG1 and MG2 can be made further compact. It should be noted that the clutch C0 is not limited to the one which performs the connection between the sun gear 41 and the motor MG1, and releases the connection therebetween. That is, the clutch C0 may be one which performs the connection between the carrier 45 (first element) and the carrier shaft 45a (motor MG2), and releases the connection therebetween, or one which performs the connection between the crankshaft 26 of the engine 22 and the ring gear 42 (third element), and releases the connection therebetween.

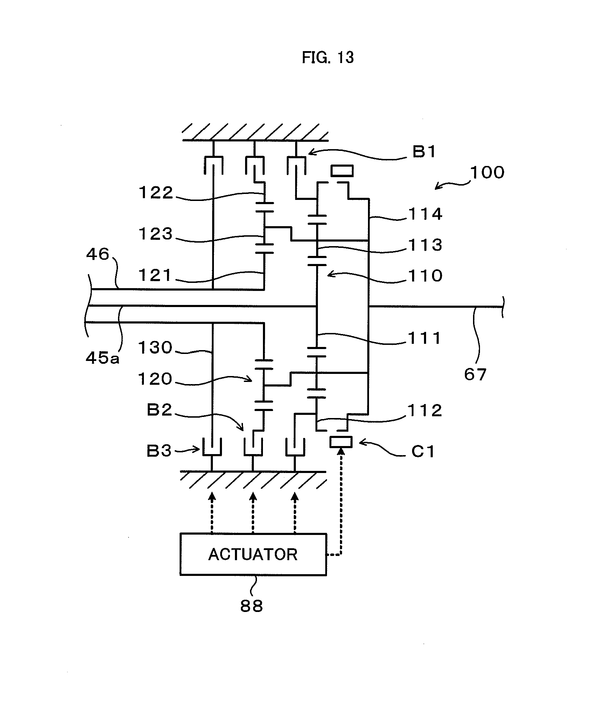

It should be noted that instead of the parallel shaft-type transmission 60, a planetary gear transmission 100 shown in Figure 13 may be used in the hybrid vehicle 20 of the present embodiment. The transmission 100 shown in Figure 13 can set the speed ratio at a plurality of stages; and includes a first transmission planetary gear mechanism 110 which is connected to the carrier 45 which is a first element of the power distribution and integration mechanism 40 through the carrier shaft 45a; a second transmission planetary gear mechanism 120 which is connected to first motor shaft 46 connectable to the sun gear 41 which is a second element of the power distribution and integration mechanism 40 through the clutch C0; a brake B1 (first fixing mechanism) provided in the first transmission planetary gear mechanism 110; a brake B2 (second fixing mechanism) provided in the second transmission planetary gear mechanism 120; a brake B3 (rotation fixing device); a clutch C1 (transmission connection/disconnection device), and the like. The first transmission planetary gear mechanism 110 and the brake B1 constitute the first transmission mechanism of the transmission 100; and the second transmission planetary gear mechanism 120 and the brake B2 constitute the second transmission mechanism of the transmission 100. As shown in Figure 13, the first transmission planetary gear mechanism 110 is a single pinion planetary gear mechanism including a sun gear 111 connected to the carrier shaft 45a; a ring gear 112 which is an internal gear arranged concentrically with the sun gear 111; a carrier 114 which is connected to the drive shaft 67 and has a plurality of pinion gears 113 which are meshed with both the sun gear 111 and the ring gear 112; and is configured such that the sun gear 111 (input element), the ring gear 112 (fixable element), and the carrier 114 (output element) can be differentially rotated with each other. Moreover, the second transmission planetary gear mechanism 120 is a single pinion planetary gear mechanism including a sun gear 121 connected to the first motor shaft 46; a ring gear 122 which is an internal gear arranged concentrically with the sun gear 121; a carrier 114 common to the first transmission planetary gear mechanism 110 which has a plurality of pinion gears 123 which are meshed with both the sun gear 121 and the ring gear 122; and is configured such that the sun gear 121 (input element), the ring gear 122 (fixable element), and the carrier 114 (output element) can be differentially rotated with each other. According to the present embodiment, the second transmission planetary gear mechanism 120 is arranged in parallel so as to be located coaxially and forward in the vehicle with respect to the first transmission planetary gear mechanism 110; and the gear ratio of the second transmission planetary gear mechanism 120 (the number of teeth of the sun gear 121/the number of teeth of the ring gear 122) is set so as to be a little larger than the gear ratio of the first transmission planetary gear mechanism 110 (the number of teeth of the sun gear 111/ the number of teeth of the ring gear 112) ρ1. The brake B1 can non-rotatably fix the ring gear 112 of the first transmission planetary gear mechanism 110 to the transmission case; can release the ring gear 112 so as to be rotatable; and is driven by the above described electric, electromagnetic, or hydraulic actuator 88. In addition, the brake B2 can non-rotatably fix the ring gear 122 of the second transmission planetary gear mechanism 120 to the transmission case; can release the ring gear 122 so as to be rotatable; and is driven by the actuator 88 in the same manner as for the brake B1. Further, the brake B3 can non-rotatably fix the first motor shaft 46, namely, the sun gear 41 which is a second element of the power distribution and integration mechanism 40 through the stator 130 fixed to the first motor shaft 46 to the transmission case; can release the stator 130 to cause the first motor shaft 46 to be rotatable; and is driven by the actuator 88 in the same manner as for the brakes B1 and B2. The clutch C1 can perform a connection and a disconnection between the carrier 114 which is an output element of the first transmission planetary gear mechanism 110 and the ring gear 112 which is a fixable element; and is driven by the actuator 88 in the same manner as for the brakes B1 to B3. The clutch C1 can be configured as, for example, a dog clutch which can mesh a dog fixed to the carrier 114 with a dog fixed to the ring gear 112 with less loss and can release the mesh therebetween. Then, power transmitted from the carrier 114 of the transmission 100 to the drive shaft 67 is finally outputted to the rear wheels 69a and 69b as the drive wheel through the differential gear 68.

The transmission 100 configured as described above can greatly reduce the axial and radial sizes, for example, in comparison with the parallel shaft-type transmission. Moreover, the first transmission planetary gear mechanism 110 and the second transmission planetary gear mechanism 120 can be located at a downstream side of and coaxially with the engine 22, the motors MG1 and MG2, and the power distribution and integration mechanism 40. Therefore, the use of the transmission 100 can simplify the shaft bearing and can reduce the number of shaft bearings. Further, the transmission 100 can set the speed ratio at a plurality of stages as described below. That is, when the brake B1 is used to non-rotatably fix the ring gear 112 of the first transmission planetary gear mechanism 110 to the transmission case, power from the carrier shaft 45a can be changed in speed at a speed ratio (ρ1/(1+ρ1)) based on the gear ratio ρ1 of the first transmission planetary gear mechanism 110 and can be transmitted to the drive shaft 67 (hereinafter, the state is referred to as a "first speed state (1st speed)". Moreover, when the brake B2 is used to non-rotatably fix the ring gear 122 of the second transmission planetary gear mechanism 120 to the transmission case, power from the first motor shaft 46 can be changed in speed at a speed ratio (ρ2/(1+ρ2)) based on the gear ratio p2 of the second transmission planetary gear mechanism 120 and can be transmitted to the drive shaft 67 (hereinafter, the state is referred to as a "second speed state (2nd speed)". Further, when the clutch C1 is used to connect the carrier 114 and the ring gear 112 of the first transmission planetary gear mechanism 110, the sun gear 111, the ring gear 112, and the carrier 114 constituting the first transmission planetary gear mechanism 110 are substantially locked to rotate integrally, and thus, power from the carrier shaft 45a can be transmitted to the drive shaft 67 at a speed ratio of 1. This state can be assumed to be a state in which the above described minimum speed ratio is set (hereinafter, the state is referred to as a "third speed state (3rd speed)".

According to the transmission 100, in the first speed state in which the brake B1 (first fixing mechanism) is used to fix the ring gear 112 as the fixable element, and the first transmission planetary gear mechanism 110 (first transmission mechanism) is used to couple the carrier 45 of the power distribution and integration mechanism 40 and the drive shaft 67, when the brake B2 as the second fixing mechanism constituting the second transmission mechanism is used to fix the ring gear 122 as the fixable element, the ring gears 112 and 122 which are fixable elements of the first and second transmission planetary gear mechanisms 110 and 120 are non-rotatably fixed by the brakes B1 and B2. Therefore, power from the engine 22 can be mechanically (directly) transmitted to the drive shaft 67 at a fixed speed ratio (the state is referred to as a "1st-2nd speed simultaneous engagement state"). Moreover, in the second speed state in which the ring gear 122 of the second transmission planetary gear mechanism 120 which does not correspond to the clutch C1 which is a transmission connection/disconnection device is non-rotatably fixed, when the clutch C1 is used to connect between the carrier 114 which is an output element of the first transmission planetary gear mechanism 110 which corresponds to the clutch C1 and the ring gear 112 which is a fixable element thereof, power from the engine 22 can be mechanically (directly) transmitted to the drive shaft 67 at a fixed speed ratio different from that of the above described 1st-2nd speed simultaneous engagement state (the state is referred to as a "2nd-3rd speed simultaneous engagement state"). Further, in the third speed state in which the clutch C1 is used to connect the carrier 114 and the ring gear 112 of the first transmission planetary gear mechanism 110, when the brake B3 as a rotation fixing device is used to non-rotatably fix the first motor shaft 46, namely, the sun gear 41 which is a second element of the power distribution and integration mechanism 40 to the transmission case through the stator 130 fixed to the first motor shaft 46, power from the engine 22 can be mechanically (directly) to the drive shaft 67 at a fixed speed ratio different from that of the above described 1st-2nd speed simultaneous engagement state and the 2nd-3rd speed simultaneous engagement state (the state is referred to as a "3rd speed fixed state"). In addition, in the first speed state in which the brake B1 is used to fix the ring gear 112 and the first transmission planetary gear mechanism 110 is used to couple the carrier 45 of the power distribution and integration mechanism 40 and the drive shaft 67, when the brake B3 as a rotation fixing device is used to non-rotatably fix the first motor shaft 46, namely, the sun gear 41 which is a second element of the power distribution and integration mechanism 40 to the transmission case through the stator 130 fixed to the first motor shaft 46, power from the engine 22 can be mechanically (directly) to the drive shaft 67 at a fixed speed ratio different from that of the above described 1st-2nd speed simultaneous engagement state, the 2nd-3rd speed simultaneous engagement state and the 3rd speed fixed state (the state is referred to as a "1st speed fixed state"). As described above, the planetary gear transmission 100 can provide advantages similar to the parallel shaft-type transmission 60.

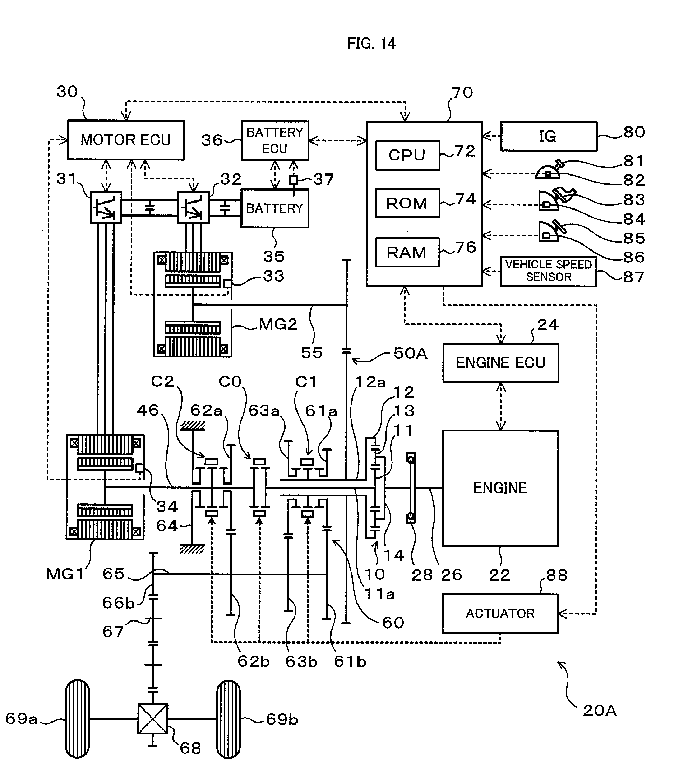

Figure 14 is a schematic configuration view of the hybrid vehicle 20A of a variation of the present embodiment. While the above described hybrid vehicle 20 is configured as a rear-wheel-drive vehicle, the hybrid vehicle 20A which is a variation thereof is configured as a front-wheel-drive vehicle. As shown in Figure 14, the hybrid vehicle 20A has a power distribution and integration mechanism 10 which is a single pinion planetary gear mechanism including the sun gear 11; the ring gear 12 arranged concentrically with the sun gear 11; and the carrier 14 having plurality of pinion gears 13 which are meshed with the sun gear 11 and the ring gear 12. In this case, the engine 22 is arranged transversely, and the crankshaft 26 of the engine 22 is connected to the carrier 14 which is a third element of the power distribution and integration mechanism 10. Moreover, the hollow ring gear shaft 12a is connected to the ring gear 12 which is a first element of the power distribution and integration mechanism 10, and the motor MG2 is connected to the ring gear shaft 12a through the reduction gear mechanism 50A which is a parallel shaft-type gear train and the second motor shaft 55 which extends in parallel to the first motor shaft 46. Moreover, the clutch C1 can be used to selectively fix one of the first speed gear train (gear 61a) and the third speed gear train (gear 63a) which constitute the first transmission mechanism of the transmission 60 to the ring gear shaft 12a. Further, the sun gear shaft 11a is connected to the sun gear 11 which is a second element of the power distribution and integration mechanism 10, the sun gear shaft 11a is connected to the clutch C0 through the hollow ring gear shaft 12a, and can be connected to the first motor shaft 46, namely, the motor MG1 by the clutch C0. Then, the clutch C2 can be used to selectively fix one of the second speed gear train (gear 62a) constituting the second transmission mechanism of the transmission 60 and the fixing member 64 fixed to the transmission case to the first motor shaft 46. As described above, the hybrid vehicle in accordance with the present invention may be configured as a front-wheel-drive vehicle.

Hereinbefore, the embodiments of the present invention have been described with reference to drawings, but the present invention is not limited to the above embodiments. It will be apparent that various modifications can be made to the present invention without departing from the spirit and scope of the present invention.

That is, the power distribution and integration mechanism provided in the above described hybrid vehicle 20 may be a planetary gear mechanism including a first sun gear and a second sun gear each having a different number of teeth; and a carrier having at least one stepped gear configured by coupling a first pinion gear meshed with the first sun gear and a second pinion gear meshed with the second sun gear. Moreover, the power distribution and integration mechanism provided in the hybrid vehicle 20 may be a single pinion planetary gear mechanism including a sun gear, a ring gear, and a carrier having at least one pinion gear meshed with both the sun gear and the ring gear. Further, the above described hybrid vehicles 20 and 20A may be configured as a rear-wheel-drive based or a front-wheel-drive based four-wheel-drive vehicle. Moreover, according to the above embodiments, each of the clutch C0, and the clutches C1 and C2 of the transmission 60 is assumed to be a dog clutch which is a mechanical jaw clutch having less loss, but each of the clutches C0 to C2 may be configured as a wet multi-plate clutch. In addition, in the above embodiments, the power output apparatus has been described as being mounted on the hybrid vehicle 20, but the power output apparatus in accordance with the present invention may be mounted on a vehicle other than a car, and a mobile body such as vessel and aircraft, and may also be installed in fixed equipment such as construction equipment.

### Industrial Applicability

The present invention can be used in a manufacturing industry of a power output apparatus, a hybrid vehicle and the like.

## Claims

1. A power output apparatus for outputting power to a drive shaft, said power output apparatus comprising:
an internal combustion engine;
a first motor capable of inputting and outputting power;
a second motor capable of inputting and outputting power;
a power distribution and integration mechanism having a first element connected to a rotating shaft of said first motor, a second element connected to a rotating shaft of said second motor, and a third element connected to an engine shaft of said internal combustion engine, said power distribution and integration mechanism being configured such that these three elements can be differentially rotated with each other;
a transmission mechanism capable of selectively coupling said first element and said second element of said power distribution and integration mechanism to said drive shaft, and capable of selectively transmitting power outputted from said power distribution and integration mechanism through said first element and power outputted from said power distribution and integration mechanism through said second element to said drive shaft at predetermined speed ratios respectively; and
a rotation fixing device capable of non-rotatably fixing one of said first element and said second element of said power distribution and integration mechanism.

2. A power output apparatus according to claim 1, wherein said transmission mechanism includes a first transmission mechanism capable of transmitting power from one of said first and second elements of said power distribution and integration mechanism to said drive shaft at a predetermined speed ratio; and a second transmission mechanism capable of transmitting power from the other of said first and second elements to said drive shaft at a predetermined speed ratio; and wherein said rotation fixing device is capable of non-rotatably fixing said first element or said second element which is not connected to one of said first and second transmission mechanisms capable of setting a minimum speed ratio.

3. A power output apparatus according to claim 1, wherein said transmission mechanism is a parallel shaft-type transmission including a first transmission mechanism having at least one parallel shaft gear train capable of coupling one of said first and second elements of said power distribution and integration mechanism to said drive shaft; and a second transmission mechanism having at least one parallel shaft gear train capable of coupling the other of said first and second elements of said power distribution and integration mechanism to said drive shaft.

4. A power output apparatus according to claim 1, wherein said transmission mechanism is a planetary gear transmission including a first transmission mechanism including a first transmission planetary gear mechanism and a first fixing device; and a second transmission mechanism including a second transmission planetary gear mechanism and a second fixing device, said first transmission planetary gear mechanism having an input element connected to said first element of said power distribution and integration mechanism, an output element connected to said drive shaft, and a fixable element, said first transmission planetary gear mechanism being configured such that these three elements can be differentially rotated with each other, said first fixing device capable of non-rotatably fixing said fixable element of said first transmission planetary gear mechanism, said second transmission planetary gear mechanism having an input element connected to said second element of said power distribution and integration mechanism, an output element connected to said drive shaft, and a fixable element, said second transmission planetary gear mechanism being configured such that these three elements can be differentially rotated with each other, said second fixing device capable of non-rotatably fixing said fixable element of second transmission planetary gear mechanism.

5. A power output apparatus according to claim 4, wherein said transmission mechanism further includes a transmission connection/disconnection device capable of performing a connection and a disconnection between said output element and said fixable element of one of said first transmission planetary gear mechanism and said second transmission planetary gear mechanism.

6. A power output apparatus according to claim 1, further comprising a connection/disconnection device capable of performing one of a connection and a disconnection between said first motor and said first element; a connection and a disconnection between said second motor and said second element; and a connection and a disconnection between said internal combustion engine and said third element.

7. A hybrid vehicle including a drive wheel driven by power from a drive shaft, said hybrid vehicle comprising:
an internal combustion engine;
a first motor capable of inputting and outputting power;
a second motor capable of inputting and outputting power;
a power distribution and integration mechanism having a first element connected to a rotating shaft of said first motor, a second element connected to a rotating shaft of said second motor, and a third element connected to an engine shaft of said internal combustion engine, said power distribution and integration mechanism being configured such that these three elements can be differentially rotated with each other;
a transmission mechanism capable of selectively coupling said first element and said second element of said power distribution and integration mechanism to said drive shaft, and capable of selectively transmitting power outputted from said power distribution and integration mechanism through said first element and power outputted from said power distribution and integration mechanism through said second element to said drive shaft at predetermined speed ratios respectively; and
a rotation fixing device capable of non-rotatably fixing one of said first element and said second element of said power distribution and integration mechanism.

8. A hybrid vehicle according to claim 7, wherein said transmission mechanism includes a first transmission mechanism capable of transmitting power from one of said first and second elements of said power distribution and integration mechanism to said drive shaft at a predetermined speed ratio; and a second transmission mechanism capable of transmitting power from the other of said first and second elements to said drive shaft at a predetermined speed ratio; and wherein said rotation fixing device is capable of non-rotatably fixing said first element or said second element which is not connected to one of said first and second transmission mechanisms capable of setting a minimum speed ratio.

9. A hybrid vehicle according to claim 7, wherein said transmission mechanism is a parallel shaft-type transmission including a first transmission mechanism having at least one parallel shaft gear train capable of coupling one of said first and second elements of said power distribution and integration mechanism to said drive shaft; and a second transmission mechanism having at least one parallel shaft gear train capable of coupling the other of said first and second elements of said power distribution and integration mechanism to said drive shaft.

10. A hybrid vehicle according to claim 7, wherein said transmission mechanism is a planetary gear transmission including a first transmission mechanism including a first transmission planetary gear mechanism and a first fixing device; and a second transmission mechanism including a second transmission planetary gear mechanism and a second fixing device, said first transmission planetary gear mechanism having an input element connected to said first element of said power distribution and integration mechanism, an output element connected to said drive shaft, and a fixable element, said first transmission planetary gear mechanism being configured such that these three elements can be differentially rotated with each other, said first fixing device capable of non-rotatably fixing said fixable element of said first transmission planetary gear mechanism, said second transmission planetary gear mechanism having an input element connected to said second element of said power distribution and integration mechanism, an output element connected to said drive shaft, and a fixable element, said second transmission planetary gear mechanism being configured such that these three elements can be differentially rotated with each other, said second fixing device capable of non-rotatably fixing said fixable element of second transmission planetary gear mechanism.

11. A hybrid vehicle according to claim 11, wherein said transmission mechanism further including a transmission connection/disconnection device capable of performing a connection and a disconnection between said output element and said fixable element of one of said first transmission planetary gear mechanism and said second transmission planetary gear mechanism.

12. A hybrid vehicle according to claim 7, further comprising a connection/disconnection device capable of performing one of a connection and a disconnection between said first motor and said first element; a connection and a disconnection between said second motor and said second element; and a connection and a disconnetion between said internal combustion engine and said third element.
